# FASCICULE DE BREVET EUROPEEN

(11) **EP 3 031 780 B1**
(45) Date de publication et mention de la délivrance du brevet: **18.09.2019**
(21) Numéro de dépôt: 15192226.7
(22) Date de dépôt: 29.10.2015
(51) Int. Cl.: C02F 1/48

(54) **DISPOSITIF DE CAPTATION DES BOUES FERRIQUES D'UN CIRCUIT HYDRAULIQUE**
VERFAHREN ZUM AUFFANGEN VON EISENHALTIGEN SCHLÄMMEN IN EINEM HYDRAULIKKREISLAUF
DEVICE FOR COLLECTING FERRIC SLUDGE FROM A HYDRAULIC CIRCUIT

(30) Priorité: 30.10.2014 FR 1460433
(43) Date de publication de la demande: 15.06.2016
(73) Titulaire: TEMIQ, 38380 Saint Pierre de Chartreuse (FR)
(72) Inventeur: LEVOIR, Stéphane, 38380 Saint Pierre de Chartreuse (FR); ROUILLE, Hervé, 69380 LISSIEU (FR)
(74) Mandataire: Be IP

(56) Documents cités:
- EP-A2- 0 110 674

## Description

La présente invention concerne le domaine technique des filtres ou systèmes utilisés pour assurer la captation des boues ferriques dans les installations hydraulique notamment mais non exclusivement dans les installations de chauffage central.

Dans le domaine ci-dessus, une demande FR 2 887 471 a proposé un dispositif de captation des particules ferreuses en suspension dans un fluide qui comprend une cuve cylindrique dotée d'un fond, d'une paroi supérieure et d'une paroi latérale comportant une cloison externe et une cloison interne. La cuve forme une chambre de captation reliée au circuit par un conduit d'entrée et un conduit de sortie. Selon ce document, la cloison externe de la paroi latérale comprend des renfoncements dans lesquels sont logés des barreaux aimantés amovibles. Le conduit d'entrée est alors placé tangentiellement à la paroi latérale de manière à ce que le fluide s'écoule selon une trajectoire hélicoïdale le long de la cloison interne. Ainsi, en phase normale d'utilisation, le liquide traverse la chambre de captation et les particules ferriques sont attirées par le champ magnétique des aimants et s'accumulent sur la face interne des renfoncements dans la cuve. Après un certain temps d'utilisation, il est procédé au nettoyage du système en fermant les conduits d'entrée et de sortie en amont et en aval de la cuve qui est alors ouverte au niveau de sa paroi supérieure pour permettre son nettoyage au jet d'eau après avoir retiré les barreaux de leur logement de manière à libérer les particules ferriques. Une demande EP110674 a proposé un système analogue pour la filtration d'encres de sérigraphie ou d'imprimerie.

De tels systèmes permettent effectivement de récupérer lesdites particules ferriques mais présente l'inconvénient de nécessiter une cuve de grande dimension par rapport à la section des conduits d'entrée et de sortie pour permettre une réduction des vitesses d'écoulement dans la cuve et autoriser la captation des particules ferriques. Or, les dimensions de la cuve imposent une modification importante de l'installation en cas de mise en place dans une installation préexistante. De plus, le système selon la demande impose une opération de nettoyage fastidieuse dans la mesure où il faut procéder à un démontage des barreaux magnétiques et à une ouverture de la cuve.

Il est donc apparu le besoin d'un nouveau système de captation des boues ferriques qui puisse facilement être mis en oeuvre sur une installation préexistante sans nécessiter une profonde modification de cette dernière et qui par ailleurs facilite les opérations de nettoyage et d'élimination des boues ferriques.

Afin d'atteindre cet objectif l'invention concerne un dispositif de captation des boues ferriques d'un circuit hydraulique assurant la circulation d'un flux principal, comprenant :
- une conduite principale destinée à être raccordée en série au circuit hydraulique et traversée par le flux principal,
- une chambre latérale de captation qui est raccordée en parallèle à la conduite principale par, d'une part, au moins une entrée latérale dont la section de passage est sensiblement parallèle à l'axe médian de la conduite principale et, d'autre part, un tube secondaire qui s'étend en partie dans la conduite principale et dont une extrémité distale située dans la conduite principale possède une section de passage située à distance de l'entrée latérale et dont une extrémité proximale est située dans la chambre de captation,
- au moins une source de champ magnétique d'adaptée pour générer dans la chambre de captation un champ magnétique destiné à retenir des boues ferriques, dans une zone de captation, sur une partie au moins de la paroi de la chambre,
- un circuit de purge raccordé à la chambre latérale de captation à l'opposé de la conduite principale et commandé par une vanne de purge.

La mise en oeuvre d'une chambre de captation latérale qui se trouve donc raccordée en parallèle par rapport au circuit principal permet de simplifier la conception et la mise en place du dispositif de captation selon l'invention dans la mesure où ce dernier peut venir s'insérer en lieu et place d'un filtre équipant déjà l'installation comme, par exemple, un filtre en Y. De plus, compte tenu de ce raccordement et dans la mesure où selon l'invention une partie seulement du flux principal est prélevé pour circuler dans la chambre de captation, l'invention permet de mettre en oeuvre une chambre de captation présentant un volume relativement peu important tout en permettant d'obtenir des conditions d'écoulement compatibles avec une captation par champ magnétique des particules ferriques. Par ailleurs, le raccordement en parallèle de la chambre de captation permet d'envisager un nettoyage de cette dernière par l'ouverture du circuit de purge sans qu'il soit forcément nécessaire d'interrompre la circulation du flux principal. Il doit être remarqué que de façon surprenante et comme des essais ont permis de le montrer, bien que l'intégralité du flux principal au niveau conduite principale ne circule pas en permanence dans la chambre de captation, le dispositif selon l'invention permet néanmoins de réduire efficacement la teneur en boue et particules ferriques dans un circuit en boucle fermée tel qu'un circuit de chauffage. En effet, après un certain temps de fonctionnement et compte tenu des écoulements turbulent du fluide, une grande partie du fluide sera passé dans la chambre de captation.

Selon une caractéristique de l'invention, la ou les entrées latérales et le tube secondaire sont adaptés pour ne prélever qu'une partie du flux principal circulant dans la conduite principale.

Selon une autre caractéristique de l'invention, la section totale d'entrée de la chambre de captation latérale est inférieure à la section de passage ou d'entrée de la conduite principale et la section totale de sortie de la chambre latérale de captation est inférieure ou égale à la section passage ou d'entrée de la conduite principale. Cette caractéristique de l'invention permet de s'assurer que la vitesse d'écoulement du fluide à traiter dans la chambre de captation latérale est inférieure à la vitesse d'écoulement du fluide dans le circuit principal de manière que la vitesse d'écoulement dans la chambre de captation soit compatible avec une captation des particules ferriques par champ magnétique.

Selon une caractéristique de l'invention, le tube secondaire est coudé de manière que la section de passage de son extrémité distale forme un angle aigu non nul avec l'axe médian de la conduite principale. Une telle caractéristique permet de favoriser la circulation du fluide dans la chambre de captation latérale.

Selon une variante de cette caractéristique, la section de passage du tube secondaire est orientée à l'opposée du sens flux principal. Cette variante permet d'engendrer un phénomène de venturi au niveau de l'extrémité distale du tube secondaire favorisant ainsi une aspiration du fluide à nettoyer au niveau de chaque entrée latérale de la chambre de captation lorsque le circuit de purge est fermé.

Selon une autre caractéristique de l'invention, la chambre de captation comprend à l'opposé de l'entrée une zone de captation annulaire qui est raccordée au circuit de purge par une chambre de purge annulaire qui converge vers le circuit de purge. La mise en oeuvre d'une zone de captation annulaire raccordée au circuit de purge par une chambre annulaire permet d'assurer un nettoyage efficace de la zone de captation pendant les séquences de purge. En effet, le caractère annulaire de la zone de captation permet de réduire substantiellement le volume de cette dernière par rapport au reste de la chambre de captation de sorte qu'il est possible d'obtenir une forte accélération des écoulements lors de la purge ce qui est favorable au décollement et à l'élimination des bouts et des particules ferriques accumulées dans la zone de captation.

Selon l'invention, la source de champ magnétique peut être de toute nature appropriée et, par exemple, comprendre un ou plusieurs électroaimants. Selon une autre caractéristique de l'invention, la source de champ magnétique comprend des aimants permanents. La mise en oeuvre d'aimants permanents permet d'assurer la captation sans source d'énergie.

Selon une variante de cette caractéristique, la source de champ magnétique comprend une ceinture d'aimants permanents situés sur une face extérieure de la paroi périphérique de la chambre de captation.

Dans le cadre de cette variante, la direction de polarisation des aimants est radiale. Cette caractéristique permet d'obtenir une meilleure répartition des lignes de champ dans la zone de captation de manière à assurer une captation plus efficace.

Selon une forme préférée, mais non strictement nécessaire, de réalisation de l'invention, la chambre de captation est délimitée à partir de la conduite principale par une paroi périphérique de forme générale cylindrique et se prolonge par une chambre de purge délimitée par une paroi de forme tronconique et convergeant en direction d'une sortie de purge qui possède une section de passage inférieure à la section de la chambre de captation et le dispositif comprend un noyau central qui s'étend dans la chambre de purge pour y délimiter un circuit de purge annulaire et convergeant vers la sortie de purge et qui s'étend dans la chambre de captation pour y définir une zone de captation annulaire en relation de laquelle est située la source de champ magnétique, la zone de captation annulaire ayant une section de passage inférieure à la section de passage nominale de la chambre de captation. Un tel mode de réalisation permet d'obtenir, lors de l'ouverture de la vanne de purge pour un cycle de purge, des vitesses d'écoulement le long des parois de la zone de captation suffisantes pour assurer un décollement des particules ferriques accumulées sans qu'il soit nécessaire de neutraliser le champ magnétique de captation ou encore de retirer la source de champ magnétique. Il est ainsi possible d'assurer une purge efficace avec un phénomène de chasse d'eau par une simple ouverture de la vanne de purge pendant une durée limitée ce qui évite une diminution trop importante de la quantité de fluide circulant dans le circuit principal en fonctionnement. Il est à noter que la conception du dispositif de captation selon l'invention permet un nettoyage de ce dernier sans arrêt de la circulation du fluide dans le circuit principal.

Selon une caractéristique de cette forme de réalisation, la zone de captation présente une section de passage qui diminue en direction de la chambre de purge. Cette diminution permet une augmentation de la vitesse d'écoulement dans la chambre de purge lors de la purge ce qui évite tout risque d'accumulation des boues et particules ferriques captées dans le circuit de purge.

Selon une autre caractéristique de la forme préférée de réalisation, le noyau central possède une face convexe située en regard de l'extrémité proximale du tube secondaire. Cette caractéristique permet d'assurer une bonne défection du flux en provenance du tube secondaire lors de la purge du dispositif de captation. De plus, cette caractéristique garantit un bon brassage et un écoulement turbulent dans la chambre de captation et plus particulièrement dans la zone de captation en phase de captation lorsque la vanne de purge fermée, ce qui est favorable à la captation des particules ferriques.

Selon encore une autre caractéristique de la forme préférée de réalisation, l'extrémité proximale du tube secondaire est située entre un plan passant par l'entrée et un plan parallèle tangent au noyau central.

Selon caractéristique de l'invention, la section de passage du tube secondaire est inférieure ou égale à 15% et, de préférence, à 12% de la section de passage nominale de la conduite principale. Un tel rapport entre la section de passage de la conduite principale et celle du tube secondaire permet de garantir des vitesses d'écoulement, dans la chambre de captation, suffisamment basses pour une captation efficace par champ magnétique.

Selon une autre caractéristique de l'invention la section de passage cumulée de la ou des entrées est inférieure ou égale à 15 % et, de préférence, à 12 % de la section de passage nominale de la conduite principale. Ce rapport entre la section de passage cumulée de la ou des entrées et celle de la conduite principale permet de garantir des vitesses d'écoulement, dans la chambre de captation, suffisamment basses pour une captation efficace par champ magnétique.

Selon encore une autre caractéristique de l'invention, la plus petite section de passage du circuit de purge est inférieure ou égale à 30 % et, de préférence, 25 % de la section de passage nominale de la conduite principale. Une telle section du circuit de purge permet d'assurer, lors de la purge, des vitesses de purge suffisamment élevées pour entrainer les boues ferriques captées.

Selon une caractéristique de l'invention, chaque entrée latérale et le tube secondaire sont adaptés pour empêcher le passage, dans la chambre de filtration, de particules solides dont la plus petite dimension est supérieure à 2 mm.

Selon une caractéristique de l'invention, le dispositif de captation comprend :
- des moyens de détection de la quantité de boues ferriques accumulées dans la chambre de captation,
- une unité de commande qui est raccordée aux moyens de détection, qui pilote la vanne de purge et qui est adaptée pour commander un cycle de purge lorsque la quantité de boues ferriques accumulées dépasse un seuil prédéterminé.

La mise en oeuvre des moyens de détection et de l'unité de commande permet d'assurer un fonctionnement automatique du dispositif de captation.

Selon une variante de cette caractéristique, le dispositif de captation, comprend un accumulateur d'énergie électrique et une source d'énergie électrique adaptés pour assurer l'alimentation électrique de l'unité de commande et de la vanne de purge au moins.

Selon une forme de réalisation de l'invention, la source d'énergie électrique comprend une turbine hydraulique alimentée par un circuit hydraulique raccordé à la conduite principale au niveau d'une entrée et d'une sortie située à distance l'une de l'autre selon l'axe médian de la conduite principale.

Selon une variante de l'invention, l'unité de commande est adaptée pour enregistrer la date de chaque instant auquel la quantité de boues ferriques accumulées dépasse le seuil prédéterminé et l'unité de commande comprend des moyens de communication adaptés pour permettre une lecture ou récupération des enregistrements effectués.

Selon une autre variante de l'invention, les moyens de détection comprennent un capteur de champ magnétique situé dans ou à proximité de la zone de captation et adapté pour mesurer la variation de l'intensité du champ magnétique dans la zone de captation. La mise en oeuvre d'un tel capteur de champ magnétique permet de réaliser de manière simple une détection de l'accumulation des particules ferriques en partant du principe que l'accumulation de ces particules crée un circuit magnétique qui induit une augmentation de l'intensité du champ magnétique mesurée par le capteur.

Bien entendu, les différentes variantes et formes de réalisation de l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description annexée effectuée en référence aux dessins qui illustrent des formes non limitatives de réalisation d'un dispositif de captation conforme à l'invention.
- La figure 1 est une partielle schématique d'un circuit hydraulique équipé d'un dispositif de captation selon l'invention.
- La figure 2 est une perspective schématique d'un dispositif de captation selon l'invention.
- La figure 3 est une coupe axiale schématique du dispositif de captation illustré à la figure 2.
- La figure 4 est une coupe transversale schématique d'une chambre de captation du dispositif de captation illustré figures 2 et 3.
- La figure 5 est une perspective schématique d'une autre forme de réalisation d'un dispositif de captation selon l'invention.
- La figure 6 est une coupe transversale schématique de la chambre de captation du dispositif de captation illustré figure 5.
- La figure 7 est une coupe axiale schématique du dispositif de captation illustré à la figure 5 montrant un circuit de dérivation équipé d'une génératrice.
- La figure 8 est une coupe axiale schématique d'une autre variante de réalisation d'un dispositif de captation conforme à l'invention.
Il est à noter que sur ces figures les éléments structurels et/ou fonctionnels communs aux différentes variantes peuvent présenter les mêmes références.

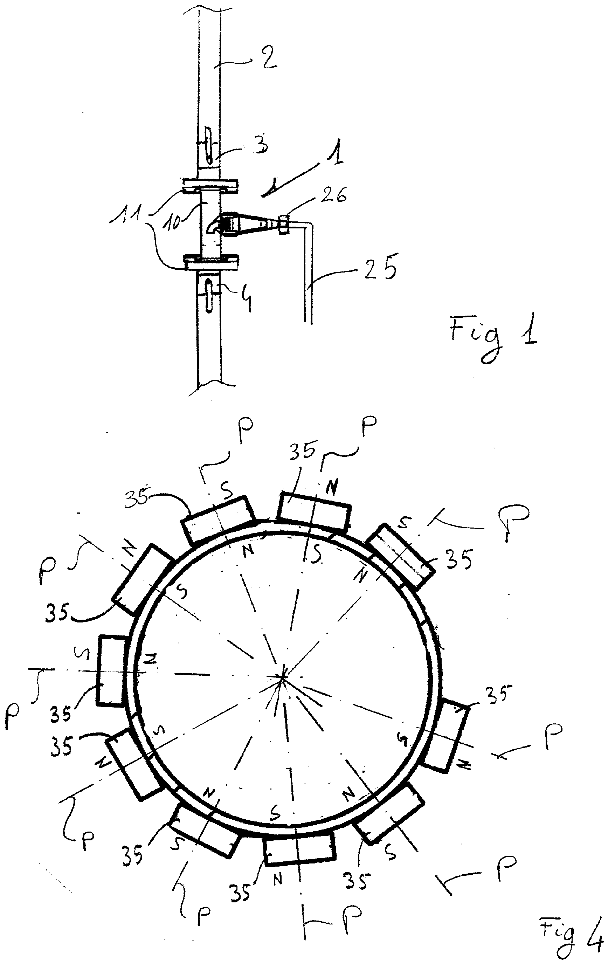

Comme le montre la figure 1, un dispositif de captation selon l'invention, désigné dans son ensemble par la référence 1, est destiné à venir s'insérer dans un circuit hydraulique 2 tel que, par exemple, un circuit de circulation d'eau de chauffage d'un bâtiment. Le dispositif de captation 1 est, par exemple, monté entre deux vannes quart de tour 3, 4 et adapté pour assurer la continuité du circuit 2.

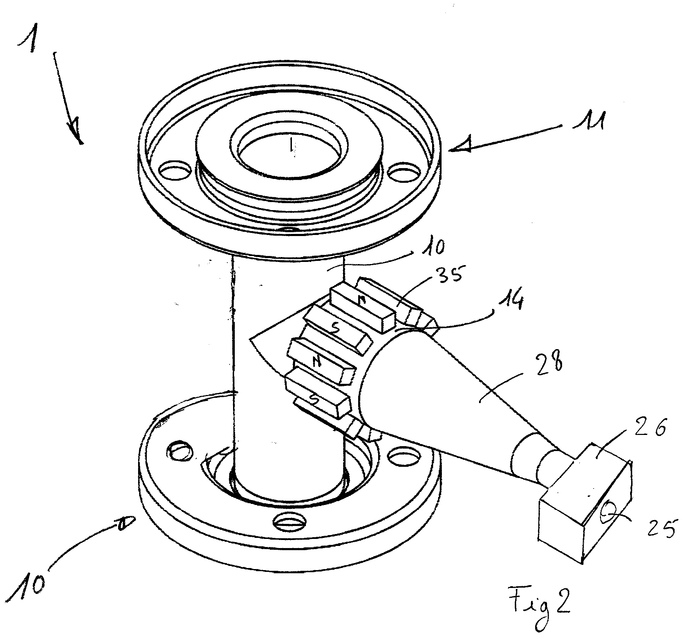

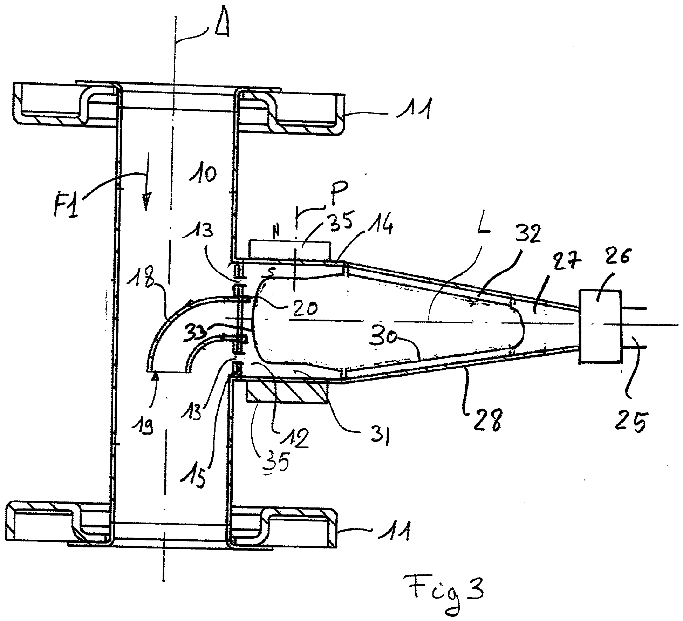

À cet effet, le dispositif de captation 1 comprend, comme le montrent les figures 2 et 3, une conduite principale 10 destinée à être fixée sur le circuit hydraulique 2 au moyen de deux brides 11 qui autorisent un démontage facile du dispositif de captation 1. Bien entendu, le dispositif de captation selon l'invention pourrait être intégré par tout autre moyen dans le circuit hydraulique 2.

Afin de permettre une captation des boues ferriques et particules de fer contenues dans le fluide parcourant le circuit 2, l'invention propose de détourner une partie seulement du flux en direction d'une chambre latérale de captation 12 de manière à y capter lesdites particules ferriques au moyen d'un champ magnétique.

Ainsi, le dispositif de captation 1, comprend une chambre latérale de captation 12 qui est raccordée à la conduite principale 10 par au moins une entrée latérale 13. Selon l'exemple illustré, la chambre latérale de captation 12 est raccordée à la conduite principale par deux entrées latérales 13 dont la section de passage est sensiblement parallèle à l'axe médian Δ de la conduite principale 10. Dans le cas présent, la chambre latérale de captation 12 est délimitée par une paroi périphérique 14 de forme générale cylindrique qui s'étend sensiblement à angle droit à partir de la conduite principale 10. Les entrées latérales 13 sont alors aménagée dans une plaque circulaire 15 qui ferme en partie le tube formé par la paroi périphérique 14 au niveau de son raccordement avec la conduite principale 10. La plaque circulaire 15 est ici sensiblement parallèle à l'axe médian Δ.

De manière à permettre la circulation du fluide à traiter dans la chambre de captation 12, cette dernière est raccordée à la conduite principale par un tube secondaire 18 qui s'étend en partie dans la conduite principale 10. Le tube secondaire 18 présente alors une extrémité distale 19 située dans la conduite principale 10 et une extrémité proximale 20 située dans la chambre de captation 12 et s'ouvre dans cette dernière. Afin d'assurer une différence de pression suffisante entre les entrées latérales 13 et la section de passage de l'extrémité distale 19 favorable à la circulation du fluide à traiter, la section de passage de l'extrémité distale 19 est située à distance de chaque entrée latérale 13.

Selon l'exemple illustré le tube secondaire 18 est coudé de manière que la section passage de son extrémité distale forme un angle aigu non nul avec l'axe médian Δ de la conduite principale 10 et dans le cas présent, un angle droit. De plus, la section passage de l'extrémité distale 19 est ici orientée à l'opposé du sens flux principal tel qu'indiqué par la flèche F1.

La chambre de captation 12 est raccordée à l'opposé de la conduite principale 10 à un circuit de purge 25 commandée par une vanne de purge 26. Selon l'exemple illustré, la chambre de captation 12 est raccordée au circuit de purge 25 par une chambre de purge 27 délimitée par une paroi de forme tronconique 28 raccordée à la paroi périphérique 14 et convergeant vers une sortie de purge raccordée au circuit de purge 25.

Les chambres de captation 12 et de purge 27 renferment un noyau 30 qui s'étend dans les deux chambres pour définir dans la chambre de captation 12 une zone de captation annulaire 31 et dans la chambre de purge 27 un circuit de purge également de forme annulaire 32. De manière préférée, l'extrémité proximale du noyau 30 située dans la chambre de captation 12 est adaptée pour que la section de passage de la zone de captation 31 diminue en direction de la chambre de purge 32 de manière à induire une accélération du fluide lors de son écoulement de la chambre de captation 12 vers la chambre de purge 32. Il doit être remarqué que selon l'exemple illustré le noyau 30 possède, en regard de l'extrémité proximale 20 du tube secondaire 18, une face convexe 33.

Afin de créer un champ magnétique de captation dans la chambre de captation 12, le dispositif de captation comprend en tant que source de champ magnétique, une ceinture annulaire d'aimants permanents 35 disposés autour de la paroi périphérique 14 à l'extérieur de cette dernière en relation avec la zone de captation 31. Les aimants permanents 35 sont disposés de manière que leur axe de polarisation P est orienté de manière radiale par rapport à l'axe longitudinal L de la chambre de captation 12. De plus, le sens de polarisation de chaque aimant 35 est inversé par rapport à celui du ou des aimant adjacents 35 ce qui permet d'obtenir une bonne répartition de l'intensité du champ magnétique généré par les aimants 35 dans la zone de captation 31. Afin de ne pas perturber l'action des aimants la conduite principale 10, les chambres de captation 12 et de purge 32 ainsi que le noyau 30 sont réalisés dans un ou des matériaux amagnétiques comme de l'acier inoxydable amagnétique et/ou des matériaux composites.

Le dispositif de captation 1 selon l'invention assure la captation de boues ou particules ferriques contenues dans le liquide circulant dans le circuit 2 et plus particulièrement dans la conduite principale 10 de la manière suivante.

En phase de captation, la vanne de purge 26 est fermée et le flux principal du liquide s'écoule dans le sens de la flèche F1. Compte tenu de la différence de pression entre les entrées 13 et l'extrémité distale 19, le liquide pénètre dans la chambre de captation 12 par chaque entrée 13 et ressort par l'extrémité distale. Il doit être remarqué que la configuration coudée du tube secondaire ainsi que l'orientation de son extrémité distale 19 à l'opposé du sens d'écoulement induisent un effet Venturi favorable à la circulation du liquide dans la chambre de captation 12.

Afin, que les vitesses d'écoulement dans la chambre de captation ne soient pas trop importantes de manière à permettre la captation des particules ferriques, la somme de sections des entrées 13 est de préférence inférieure ou égale à 15% de la section de passage nominale de la conduite principale 10 telle que, par exemple, mesurée en amont du raccordement avec la chambre de captation. De manière plus particulièrement préférée, la somme des sections des entrées 13 est inférieure ou égale à 12% de la section de passage nominale de la conduite principale. De même, la section de passage de l'extrémité distale 19 du tube secondaire 18 est de préférence inférieure ou égale à 15% de la section de passage nominale de la conduite principale 10 telle que, par exemple, mesurée en amont du raccordement avec la chambre de captation. De manière plus particulièrement préférée, la section de passage de l'extrémité distale 19 est inférieure ou égale à 12% de la section de passage nominale de la conduite principale.

Au fur et à mesure du passage du liquide à traiter dans la chambre de captation 12, les particules ferriques qu'il contient s'accumulent dans la zone de captation 31 au niveau de la surface interne de sa paroi extérieure portant les aimants. Il sera noté qu'en phase de captation, la quantité de fluide circulant dans la chambre de captation est inférieure voire très inférieure à la quantité totale de fluide circulant dans la conduite principale. Dit autrement, en phase de captation le débit de fluide dans la chambre de captation est inférieur au débit de fluide dans la conduite principale.

Pour procéder à un nettoyage de la zone de captation et une évacuation des particules ferriques accumulées, il suffit d'ouvrir la vanne de purge 26, le liquide de la canalisation principale 10 pénètre alors dans la chambre de captation 12 par les entrées 13 ainsi que le tube secondaire 18. Il s'en suit un écoulement turbulent rapide vers le circuit de purge 25 qui par un effet de chasse décolle les particules ferriques qui sont évacuées vers le circuit de purge sans qu'il soit nécessaire de déplacer les aimants permanents ou de neutraliser leur champ magnétique. En effet, la conformation annulaire de la majeure partie de la zone de captation 31 impose des vitesses d'écoulement rapides au contact des parois où se sont accumulées les particules ferriques. Il sera noté que compte tenu des faibles dimension de la chambre de captation et des dimensionnement des sections du tube secondaire, de l'entrée latérale et du circuit de purge, l'ouverture du circuit de purge est possible sans risque de vidange importante du fluide. De plus, pour les mêmes raisons, le nettoyage de la chambre de captation peut être effectué avec une quantité de fluide faible par rapport à la quantité totale de fluide circulant dans le circuit hydraulique 2 de sorte que le nettoyage peut être effectué sans qu'il soit nécessaire d'arrêter le fonctionnement de l'installation équipée du dispositif selon l'invention.

Afin d'éviter des risques d'obturation de la chambre de captation 12 et de la chambre de purge 32, chaque entrée 13 et le tube secondaire 18 sont de préférence adaptés pour ne pas laisser passer des particules de dimension supérieure à 2 mm. A cet effet, les dimensions de chaque entrée 13 peuvent être adaptées pour bloquer les particules de taille supérieure. Il peut également être mis en oeuvre un tamis au niveau des entrées 13 ainsi que de l'extrémité distale 19 du tube secondaire 18.

La purge et le nettoyage du dispositif de captation selon l'invention peut être effectuée de manière manuelle en ce que l'ouverture de la vanne de purge est commandé ou assurée par l'intervention d'un opérateur.

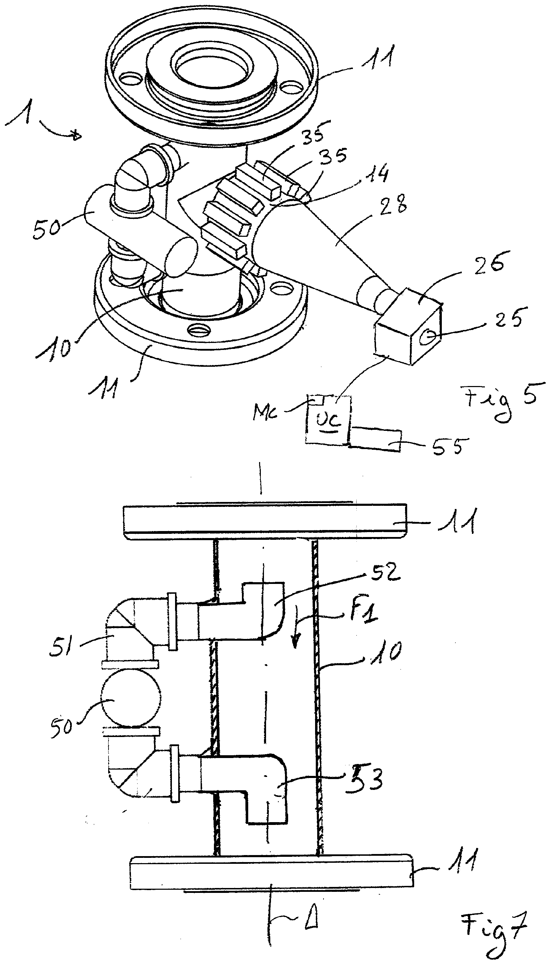

Cependant, dans une forme préférée de réalisation du dispositif de captation 1 illustrée figure 5 à 6, le processus de d'évacuation des particules ferriques est assuré de manière automatisée.

A cet effet, la vanne 26 est une vanne commandée pilotée par une unité de commande UC qui déclenche périodiquement l'ouverture de la vanne 26.

Selon une variante de cette forme préférée de réalisation, l'évacuation des particules ferriques est effectuée en fonction de la quantité de particules accumulées. Le dispositif de captation 1 comprend alors des moyens 40 de détection de la quantité de boues ou particules ferriques accumulées dans la chambre de captation. Ces moyens de détection 40 sont raccordés à l'unité de commande UC qui pilote un cycle de purge et donc une ouverture puis une fermeture de la vanne de purge 26 lorsque la quantité de boues ferriques accumulées dépasse un seuil prédéterminé. L'unité de commande UC peut alors être adaptée pour dater et enregistrer chaque instant auquel la quantité de boues ferriques accumulées dépasse le seuil prédéterminé. L'unité de commande UC comprend dans ce cas des moyens de communication MC permettant une lecture ou récupération des enregistrements effectués.

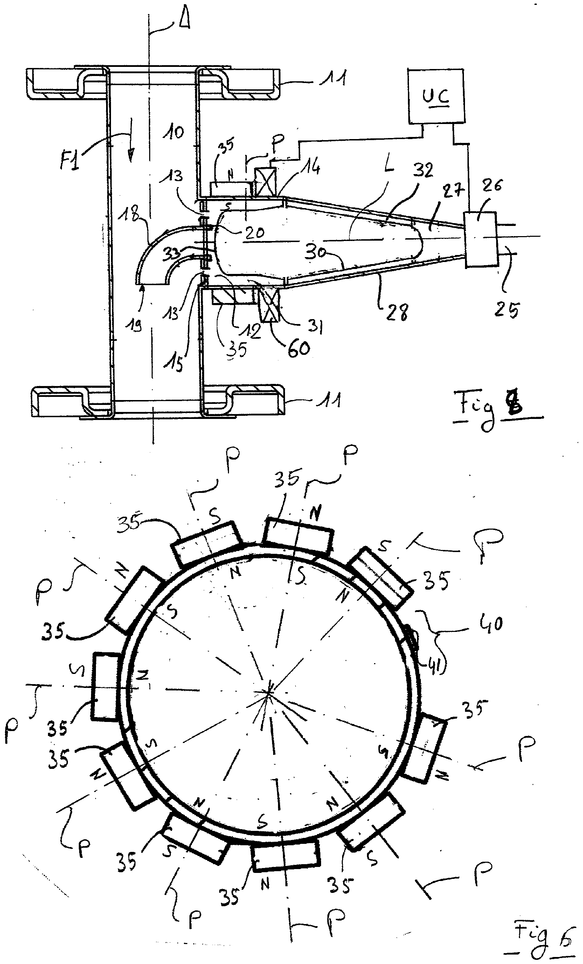

Selon l'invention, les moyens de détection 40 peuvent être réalisés de toute façon appropriée. Selon une forme préférée de réalisation, les moyens de détection 40 comprennent un capteur magnétique 41, tel que par exemple un capteur à effet Hall, disposé entre deux des aimants permanents 35. Selon l'exemple illustré, le capteur magnétique n'est pas situé à égale distance des deux aimants entre lesquels il est placé et se trouve donc situé plus près d'un des deux aimants que de l'autre comme le montre la figure 6. Cette position permet augmenter la sensibilité de la mesure. Cependant, le capteur magnétique pourrait aussi être placé à égale distance des deux aimants entre lesquels il est situé.

Le capteur magnétique 41 permet à l'unité de commande de mesurer l'intensité du champ magnétique qui augmente au niveau du capteur au fur et à mesure de l'accumulation des particules ferriques. En effet, les particules ferriques accumulées sur la paroi et donc à proximité du capteur magnétique 41 contribuent à former un circuit magnétique qui referment les lignes de champ de sorte que l'intensité du champ magnétique mesuré augmente avec l'accumulation des particules ferriques. Ainsi, lorsque le champ magnétique mesuré dépasse une valeur correspondant à une certaine accumulation au-delà de laquelle l'évacuation des particules pourrait être difficile, l'unité de commande UC pilote une ouverture de la vanne de purge pour une duré suffisante pour permettre une évacuation des particules ou boues ferriques accumulées.

L'alimentation électrique de l'unité de commande UC peut être réalisée de toute manière appropriée et, par exemple, en raccordant l'unité de commande UC à un réseau de distribution d'électricité et/ou en équipant l'unité de commande UC d'un système de batterie.

Selon une forme de réalisation illustrée figures 5 à 7, le dispositif de captation 1 est autonome et comprend une génératrice hydraulique 50 qui est raccordée en parallèle à la conduite principale 10 par un circuit de dérivation 51. Comme le montre la figure 7, le circuit de dérivation 51 comprend un coude d'entrée 52 situé dans la canalisation principale 10 et ouvert face au flux principale. Le circuit de dérivation 51 comprend, en aval du coude d'entrée 52, un coude de sortie 53 situé dans la conduite principale et ouvert à l'opposé du coude d'entrée 51 et du sens du flux principale illustré par la flèche 1. La génératrice 50 fournie de l'énergie électrique à l'unité de commande UC. Afin, d'assurer un stockage de cette énergie électrique, l'unité de commande UC comprend alors un système d'accumulateur 55 comprenant une batterie et/ou un ou plusieurs condensateurs.

Selon les formes de réalisation décrites précédemment, le décollement des particules s'effectue par un simple phénomène de chasse sans assistance magnétique ou électromagnétique. Toutefois, le dispositif selon l'invention peut également comprendre en plus d'aimants permanent une bobine électromagnétique chargée d'aider au décollement des particules et boues ferriques captées. Ainsi, la figure 8 illustre une autre forme de réalisation d'un dispositif de captation selon l'invention qui comprend une bobine 60 située autour de la zone de captation 31 entre les aimants 35 et le circuit de purge 25 et raccordée à l'unité de commande UC.

Lors d'une purge ou d'un nettoyage de la chambre de captation, l'unité de commande pilote l'ouverture de la vanne de purge 26 puis, juste après, commande pendant une petite période de temps l'alimentation de la bobine 60. Pendant cette durée d'alimentation il se crée un champ magnétique qui attire les particules ferriques vers la zone de la chambre de captation située en regards de la bobine 60, ce mouvement est de plus aidé par le déplacement de liquide vers le circuit de purge. Les particules se trouvent alors déplacée dans le sens de la purge. Ensuite, lorsque l'alimentation de la bobine 60 est interrompue les particules poursuivent leur chemin dans le circuit de purge.

Bien entendu, diverse autres modifications au dispositif de captation de boues ferriques selon l'invention peuvent être envisagées dans le cadre des revendications annexées.

## Revendications

1. Dispositif de captation des boues ferriques d'un circuit hydraulique (2) assurant la circulation d'un flux principal, comprenant :
- une conduite principale (10) destinée à être accordé en série au circuit hydraulique (2) et traversée par le flux principal,
- une chambre latérale de captation (12) qui est raccordée en parallèle à la conduite principale (10) par, d'une part, au moins une entrée latérale (13) dont la section de passage est sensiblement parallèle à l'axe médian (Δ) de la conduite principale (10) et, d'autre part, un tube secondaire (18) qui s'étend en partie dans la conduite principale (10) et dont une extrémité distale (19) située dans la conduite principale (10) possède une section de passage située à distance de l'entrée latérale (13) et dont une extrémité proximale (20) est située dans la chambre de captation (12),
- au moins une source (35) de champ magnétique d'adaptée pour générer dans la chambre de captation (12) un champ magnétique destiné à retenir des boues ferriques dans une zone de captation sur une partie au moins de la paroi de la chambre,
- un circuit de purge (25) raccordé à la chambre latérale de captation (12) à l'opposé de la conduite principale (10) et commandé par une vanne de purge (26).

2. Dispositif de captation selon la revendication 1, **caractérisée en ce que** la section totale d'entrée de la chambre latérale de captation (12) est inférieure à la section de passage ou d'entrée de la conduite principale (10) et **en ce que** la section porte totale de sortie de la chambre latérale de captation (12) est inférieure ou égale à la section passage ou d'entrée de la conduite principale (10).

3. Dispositif de captation selon la revendication 1, **caractérisé en ce que** le tube secondaire (18) est coudé de manière que la section de passage de son extrémité distale (19) forme un angle aigu non nul avec l'axe médian (Δ) de la conduite principale (10).

4. Dispositif de captation selon l'une des revendications précédentes, **caractérisé en ce que** la chambre de captation (12) comprend à l'opposé de l'entrée une zone de captation annulaire (31) qui est raccordée au circuit de purge (25) par une chambre de purge annulaire (32) qui converge vers le circuit de purge (25).

5. Dispositif de captation selon l'une des revendications précédentes, **caractérisé en ce que** la source de champ magnétique comprend des aimants permanents (35).

6. Dispositif de captation selon les revendications 4 et 5, **caractérisé en ce que** la source de champ magnétique comprend une ceinture d'aimants permanents (35) situés sur une face extérieure de la paroi périphérique de la chambre de captation au niveau de la zone de captation.

7. Dispositif de captation selon la revendication précédente, **caractérisé en ce que** la direction de polarisation (P) des aimants est orientée radialement par rapport à l'axe longitudinal (L)de la chambre de captation.

8. Dispositif de captation selon l'une des revendications précédentes, **caractérisé en ce que** la chambre de captation (12) est délimitée à partir de la conduite principale (10) par une paroi périphérique de forme générale cylindrique et se prolonge par une chambre de purge (32) délimitée par une paroi de forme tronconique (28) et convergeant en direction d'une sortie de purge qui possède une section de passage inférieure à la section de la chambre de captation (12) et **en ce qu'**il comprend un noyau central (30) qui s'étend dans la chambre de purge (32) pour y délimiter un circuit de purge annulaire et convergeant vers la sortie de purge et qui s'étend dans la chambre de captation (12) pour y définir une zone de captation (31) annulaire en relation de laquelle est située la source de champ magnétique (35), la zone de captation annulaire ayant une section de passage inférieure à la section de passage nominale de la chambre de captation (12).

9. Dispositif de captation selon la revendication précédente, **caractérisé en ce que** la zone de captation (31) présente une section de passage qui diminue en direction de la chambre de purge (32).

10. Dispositif de captation selon la revendication précédente, **caractérisé en ce que** le noyau central (30) possède une face convexe située en regard de l'extrémité proximale du tube secondaire (20).

11. Dispositif de captation selon l'une des revendications précédentes, **caractérisé en ce que** la section de passage du tube secondaire (18) est inférieure ou égale à 15 % et de préférence 12% de la section de passage nominale de la conduite principale (10).

12. Dispositif de captation selon l'une des revendications précédentes, **caractérisé en ce que** la section de passage cumulée de la ou des entrées est inférieure ou égale à 15 % et de préférence 12% de la section de passage nominale de la conduite principale (10).

13. Dispositif de captation selon l'une des revendications précédentes, **caractérisé en ce que** la plus petite section de passage du circuit de purge (25) est inférieure ou égale à 30% et de préférence 25% de la section de passage nominale de la conduite principale (10).

14. Dispositif de captation selon l'une des revendications précédentes, **caractérisé en ce qu'**il comprend :
- des moyens (40) de détection de la quantité de boues ferriques accumulées dans la chambre de captation,
- une unité de commande (UC) qui est raccordée aux moyens de détection (40), qui pilote la vanne de purge (26) et qui est adaptée pour commander un cycle de purge lorsque la quantité de boues ferriques accumulées dépasse un seuil prédéterminé.

15. Dispositif de captation selon la revendication 14, **caractérisé en ce que** les moyens de détection (40) comprennent un capteur de champ magnétique situé dans ou à proximité de la zone de captation (31) et adapté pour mesurer la variation de l'intensité du champ magnétique dans la zone de captation (31).

## Patentansprüche

1. Vorrichtung zum Auffangen der Eisenschlämme eines Flüssigkeitskreislaufs (2) zur Gewährleistung des Umlaufs einer Hauptströmung, umfassend:
- eine Hauptleitung (10), die dazu bestimmt ist, mit dem Flüssigkeitskreislauf (2) in Reihe verbunden zu werden und durch die Hauptströmung durchquert zu werden,
- eine seitliche Auffangkammer (12), die einerseits über mindestens einen seitlichen Eingang (13), dessen Durchgangsquerschnitt im Wesentlichen parallel zur Mittellinie (Δ) der Hauptleitung (10) ist, und andererseits ein Nebenrohr (18), das sich teilweise in der Hauptleitung (10) erstreckt und von dem ein distales Ende (19), das sich in der Hauptleitung (10) befindet, einen Durchgangsquerschnitt aufweist, der sich vom seitlichen Eingang (13) beabstandet befindet, und von dem ein proximales Ende (20) sich in der Auffangkammer (12) befindet, parallel mit der Hauptleitung (10) verbunden ist,
- mindestens eine Magnetfeldquelle (35), die so gestaltet ist, dass in der Auffangkammer (12) ein Magnetfeld erzeugt wird, das dazu bestimmt ist, Eisenschlämme in einer Auffangzone auf zumindest einem Teil der Wand der Kammer zurückzuhalten,
- einen Ablasskreislauf (25), der mit der seitlichen Auffangwand (12) der Hauptleitung (10) entgegengesetzt verbunden ist und durch einen Ablassschieber (26) gesteuert wird.

2. Auffangvorrichtung nach Anspruch 1, **dadurch gekennzeichnet, dass** der Gesamteingangsquerschnitt der seitlichen Auffangkammer (12) kleiner ist als der Durchgangs-oder Eingangsquerschnitt der Hauptleitung (10), und dadurch, dass der Gesamtausgangsquerschnitt der seitlichen Auffangkammer (12) kleiner oder gleich der Durchgangs- oder Eingangsquerschnitt der Hauptleitung (10) ist.

3. Auffangvorrichtung nach Anspruch 1, **dadurch gekennzeichnet, dass** das Nebenrohr (18) derart gekrümmt ist, dass der Durchgangsquerschnitt seines distalen Endes (19) einen spitzen Winkel ungleich Null mit der Mittellinie (Δ) der Hauptleitung (10) bildet.

4. Auffangvorrichtung nach einem der vorhergehenden Ansprüche, **dadurch gekennzeichnet, dass** die Auffangkammer (12) dem Eingang entgegengesetzt eine ringförmige Auffangzone (31) umfasst, die über eine ringförmige Ablasskammer (32), die hin zu dem Ablasskreislauf (25) zusammenläuft, mit dem Ablasskreislauf (25) verbunden ist.

5. Auffangvorrichtung nach einem der vorhergehenden Ansprüche, **dadurch gekennzeichnet, dass** die Magnetfeldquelle Permanentmagnete (35) umfasst.

6. Auffangvorrichtung nach Anspruch 4 und 5, **dadurch gekennzeichnet, dass** die Magnetfeldquelle einen Gürtel aus Permanentmagneten (35) umfasst, die sich auf einer Außenseite der Umfangswand der Auffangkammer im Bereich der Auffangzone befinden.

7. Auffangvorrichtung nach dem vorhergehenden Anspruch, **dadurch gekennzeichnet, dass** die Polarisationsrichtung (P) der Magnete in Bezug zur Längsachse (L) der Auffangkammer radial ausgerichtet ist.

8. Auffangvorrichtung nach einem der vorhergehenden Ansprüche, **dadurch gekennzeichnet, dass** die Auffangkammer (12) ausgehend von der Hauptleitung (10) durch eine Umfangswand mit allgemein zylindrischer Form abgegrenzt ist und durch eine Ablasskammer (32) verlängert ist, die durch eine kegelstumpfförmige Wand (28) abgegrenzt ist und in Richtung eines Ablassausgangs zusammenläuft, der einen Durchgangsquerschnitt aufweist, der kleiner als der Querschnitt der Auffangkammer (12) ist, und dadurch, dass sie einen mittleren Kern (30) umfasst, der sich in die Ablasskammer (32) erstreckt, um dort einen ringförmigen Ablasskreislauf abzugrenzen, und hin zu dem Ablassausgang zusammenläuft, und sich in die Auffangkammer (12) erstreckt, um darin eine ringförmige Auffangzone (31) zu definieren, in Bezug zu der die Magnetfeldquelle (35) sich befindet, wobei die ringförmige Auffangzone einen Durchgangsquerschnitt aufweist, der kleiner als der Nenndurchgangsquerschnitt der Auffangkammer (12) ist.

9. Auffangvorrichtung nach dem vorhergehenden Anspruch, **dadurch gekennzeichnet, dass** die Auffangzone (31) einen Durchgangsquerschnitt aufweist, der in Richtung der Ablasskammer (32) abnimmt.

10. Auffangvorrichtung nach dem vorhergehenden Anspruch, **dadurch gekennzeichnet, dass** der mittlere Kern (30) eine konvexe Seite aufweist, die sich dem proximalen Ende des Nebenrohrs (20) gegenüberliegend befindet.

11. Auffangvorrichtung nach einem der vorhergehenden Ansprüche, **dadurch gekennzeichnet, dass** der Durchgangsquerschnitt des Nebenrohrs (18) kleiner oder gleich 15% und vorzugsweise 12% des Nenndurchgangsquerschnitts der Hauptleitung (10) ist.

12. Auffangvorrichtung nach einem der vorhergehenden Ansprüche, **dadurch gekennzeichnet, dass** der kumulierte Durchgangsquerschnitt des oder der Eingänge kleiner oder gleich 15% und vorzugsweise 12% des Nenndurchgangsquerschnitts der Hauptleitung (10) ist.

13. Auffangvorrichtung nach einem der vorhergehenden Ansprüche, **dadurch gekennzeichnet, dass** der kleinste Durchgangsquerschnitt des Ablasskreislaufs (25) kleiner oder gleich 30% und vorzugsweise 25% des Nenndurchgangsquerschnitts der Hauptleitung (10) ist.

14. Auffangvorrichtung nach einem der vorhergehenden Ansprüche, **dadurch gekennzeichnet, dass** sie Folgendes umfasst:
- Mittel (40) zur Feststellung der Menge an in der Auffangkammer kumulierten Eisenschlämmen,
- eine Steuereinheit (UC), die mit den Feststellungsmitteln (40) verbunden ist, die den Ablassschieber (26) führt und die so gestaltet ist, dass ein Ablasszyklus gesteuert wird, wenn die Menge an kumulierten Eisenschlämmen einen vorbestimmten Schwellenwert überschreitet.

15. Auffangvorrichtung nach Anspruch 14, **dadurch gekennzeichnet, dass** die Feststellungsmittel (40) einen Magnetfeldsensor umfassen, der sich in oder in der Nähe der Auffangzone (31) befindet und so gestaltet ist, dass die Schwankung der Stärke des Magnetfelds in der Auffangzone (31) gemessen wird.

## Claims

1. A device for collecting ferric sludge of a hydraulic circuit (2) ensuring the circulation of a main flow, comprising:
- a main duct (10) intended to be connected in series to the hydraulic circuit (2) and traversed by the main flow,
- a lateral collection chamber (12) which is connected in parallel with the main duct (10) by, on the one hand, at least one lateral inlet (13) whose passage section is substantially parallel to the median axis (Δ) of the main duct (10) and, on the other hand, a secondary tube (18) which extends partly in the main duct (10) and whose distal end (19) located in the main duct (10) has a passage section located at a distance from the lateral inlet (13) and whose proximal end (20) is located in the collection chamber (12),
- at least one magnetic field source (35) adapted to generate in the collection chamber (12) a magnetic field intended to retain ferric sludge in a collection area on at least part of the wall of the chamber,
- a purge circuit (25) connected to the lateral collection chamber (12) opposite to the main duct (10) and controlled by a purge valve (26).

2. The collection device according to claim 1, **characterized in that** the total inlet section of the lateral collection chamber (12) is smaller than the passage or inlet section of the main duct (10) and **in that** the total outlet section of the lateral collection chamber (12) is smaller than or equal to the passage or inlet section of the main duct (10).

3. The collection device according to claim 1, **characterized in that** the secondary tube (18) is bent so that the passage section of its distal end (19) forms a non-zero acute angle with the median axis (Δ) of the main duct (10).

4. The collection device according to any of the preceding claims, **characterized in that** the collection chamber (12) comprises, opposite to the inlet, an annular collection area (31) which is connected to the purge circuit (25) by an annular purge chamber (32) which converges towards the purge circuit (25) .

5. The collection device according to any of the preceding claims, **characterized in that** the magnetic field source comprises permanent magnets (35).

6. The collection device according to claims 4 and 5, **characterized in that** the magnetic field source comprises a permanent magnets belt (35) located on an outer face of the peripheral wall of the collection chamber at the collection area.

7. The collection device according to the preceding claim, **characterized in that** the direction of polarization (P) of the magnets is oriented radially with respect to the longitudinal axis (L) of the collection chamber.

8. The collection device according to any of the preceding claims, **characterized in that** the collection chamber (12) is delimited from the main duct (10) by a peripheral wall of generally cylindrical shape and is extended by a purge chamber (32) delimited by a truncated cone-shaped wall (28) and converging in the direction of a purge outlet that has a passage section smaller than the section of the collection chamber (12) and **in that** it comprises a central core (30) which extends into the purge chamber (32) to delimit an annular purge circuit therein and converging towards the purge outlet and which extends into the collection chamber (12) to define an annular collection area (31) therein in relation to which the magnetic field source (35) is located, the annular collection area having a passage section smaller than the nominal passage section of the collection chamber (12).

9. The collection device according to the preceding claim, **characterized in that** the collection area (31) has a passage section which decreases in the direction of the purge chamber (32) .

10. The collection device according to the preceding claim, **characterized in that** the central core (30) has a convex face located facing the proximal end of the secondary tube (20).

11. The collection device according to any of the preceding claims, **characterized in that** the passage section of the secondary tube (18) is smaller than or equal to 15% and preferably 12% of the nominal passage section of the main duct (10) .

12. The collection device according to any of the preceding claims, **characterized in that** the cumulated passage section of the inlet(s) is smaller than or equal to 15% and preferably 12% of the nominal passage section of the main duct (10).

13. The collection device according to any of the preceding claims, **characterized in that** the smallest passage section of the purge circuit (25) is smaller than or equal to 30% and preferably 25% of the nominal passage section of the main duct (10) .

14. The collection device according to any of the preceding claims, **characterized in that** it comprises:
- means (40) for detecting the amount of ferric sludge accumulated in the collection chamber,
- a control unit (UC) which is connected to the detection means (40), which drives the purge valve (26) and which is adapted to control a purge cycle when the amount of accumulated ferric sludge exceeds a predetermined threshold.

15. The collection device according to claim 14, **characterized in that** the detection means (40) comprise a magnetic field sensor located in or near of the collection area (31) and adapted to measure the variation of the intensity of the magnetic field in the collection area (31).
